# EUROPEAN PATENT APPLICATION

(11) **EP 3 882 072 A1**
(43) Date of publication of application: **22.09.2021**
(21) Application number: 21162967.0
(22) Date of filing: 16.03.2021
(51) Int. Cl.: B60N 2/28

(54) **CHILD CAR SEAT**

(30) Priority: 16.03.2020 GB 202003800
(71) Applicant: Trafold Limited, Carshalton SM5 3QB (GB)
(72) Inventor: CHOI, Ka Yuen, Sutton, SM2 6AS (GB); YEH, Kuo Hsin, Hsinciu (TW); KANG, Chia Chang, 114 Taipei City (TW)
(74) Representative: HGF

(57) **Abstract**

A child car seat (1) for mounting in a vehicle is disclosed. The child car seat (1) includes a seat portion (2) for a child to sit on, a rigid back portion (3) attached to the seat portion to support a back of the child, and a headrest (4) to support a head of the child. The headrest (4) is slidably mounted to the back portion such that the headrest can be slid to alter a distance between the seat portion and the headrest to accommodate different size children. In addition, the child car seat includes a harness (6) comprising a buckle (7) attached to the seat portion and a strap (8) extending from the headrest to engage the buckle such that sliding the headrest relative to the back portion adjusts a position of the strap.

## Description

This invention relates generally to a child car seat for mounting to a vehicle. More specifically, although not exclusively, this invention relates to a child car seat for mounting to a vehicle seat by using a three-point seat belt of the vehicle seat. The invention further relates to a child car seat for a mounting to a vehicle, where the child car seat can be folded for storage. The invention further relates to other features of a child car seat.

It is usually a legal requirement for a child to use a child car seat when travelling in a vehicle, for example a car. Typically, different child car seats are required for different age groups of children. For example, a child car seat for a baby (typically less than about 15 months old) is a different child car seat for a toddler (typically between 15 and 36 months old), which is different from a child car booster seat for older children (typically 36 months and older). In some circumstances, for example when a public hire vehicle such as a taxi carries a child, advance booking is required to ensure that the vehicle is equipped with the correct child car seat because it is not convenient to carry around multiple child car seats.

Some child car seats are mounted to a vehicle seat by ISOFIX attachment points, which usually requires a separate base part that connects to the ISOFIX points on the vehicle and that the child car seat is then attached to. Alternatively, many child car seats can be mounted to a vehicle seat by using the vehicle's three-point seat belt or a separate strap provided specifically for the child car seat. In the absence of an ISOFIX base part it is often difficult and time consuming to secure a child car seat using a three-point seat belt.

It would therefore be advantageous to provide a child car seat that can be easily adapted for use with different age children, in particular children having different heights. Preferably, the child car seat can be easily mounted and dismounted from a vehicle, and preferably the child car seat can be easily stored when not being used.

Accordingly, a first aspect of the invention provides a child car seat for mounting in a vehicle. The child car seat comprises a seat portion for a child to sit on, a rigid back portion attached to the seat portion to support a back of the child, and a headrest to support a head of the child. The headrest is slidably mounted to the back portion such that the headrest can be slid to alter a distance between the seat portion and the headrest to accommodate different size children. The child car seat also includes a harness comprising a buckle attached to the seat portion and a strap extending from the headrest to engage the buckle such that sliding the headrest relative to the back portion adjusts a position of the strap.

In this way, the child car seat can be configured for a range of different size children by sliding the headrest relative to the back portion and simultaneously adjusting the position of the strap. In particular, moving the headrest alters the position of the top of the strap relative to the seat portion, so that the top of the strap can be optimally positioned relative to the shoulder of the child.

In addition, the headrest can be moved to reduce the size of the child car seat when it is not being used, making the child car seat more compact and convenient to store and/or transport between uses.

In some examples, an end of the strap is anchored to the headrest, and so moving the headrest alters the position of the end of the strap. In alternative examples an end of the strap is anchored to the back portion, and the headrest comprises a loop through which the strap passes. In this example, moving the headrest alters the position of the loop according to the height of the child.

Preferably, the harness comprises two straps extending from the headrest to engage the buckle. In some examples, each strap is looped through a side loop on the seat portion before engaging the buckle so that each strap extends across the chest and a part of the side and/or lap of the child. In alternative examples, each strap extends directly from the headrest to the buckle and the harness includes separate side portions that extend across the chest and a part of the side and/or lap of the child.

Preferably, the headrest further comprises a back member extending towards the seat portion and overlapping a part of the back portion such that the child rests on the back member during use. In this example, moving the headrest also moves the back member.

In preferred examples, the seat portion is hingedly mounted to the back portion such that the seat portion can be folded between an operational position in which the seat portion and the back portion are arranged for a child to sit on, and a folded position in which the seat portion is folded towards the back portion.

Preferably, the seat portion folds in direction of the seating area, i.e. towards the headrest and buckle.

Accordingly, the seat portion can be folded to reduce the size of the child car seat for storage and/or transport. The folded child car seat is compact and can be easily stored when not being used.

Preferably, the child car seat further comprises a lock adapted to lock the seat portion in the folded position. The lock may be further adapted to lock the seat portion in the operational position. Preferably, the lock automatically locks the seat portion in the folded and/or operational position when the seat portion reaches that position. The lock preferably comprises a release lever operable to release the seat portion from the locked position. Advantageously, the release lever is disposed on a rear side of the back portion, opposite to the seat portion. In this case, the release lever cannot be accessed or operated during use. The lock is preferably a spring-loaded bolt mechanism. The back member may comprise a spring-loaded bolt, and the seat portion may comprise two recesses to receive the spring-loaded bolt in the operational and folded positions, respectively.

Preferably, the seat portion comprises a storage recess for the buckle. In some configurations the buckle is not used, and can be stored in the storage recess. The buckle may also be stored in the storage recess during storage. The seat portion preferably has a cover flap extending over the storage recess.

In preferred examples, the back portion further comprises opposing side wings extending from either side of the back portion to partially surround the child during use. The side wings provide protection against side impacts and restrict the sideways movement of the child during use. Preferably, the opposing side wings are fixed to the back portion.

In examples where the seat portion is foldable relative to the back portion, as described above, the seat portion is preferably disposed between the opposing side wings in the folded position.

In preferred examples, each of the opposing side wings comprises a foldable flap hingedly attached to the respective side wing. Each foldable flap is preferably foldable between a first position in which the foldable flap is substantially aligned with the side wing, and a second position in which the foldable flap is folded against the side wing and disposed between the opposing side wings.

Accordingly, a further aspect of the present invention provides a child car seat comprising a seat portion for a child to sit on, a rigid back portion attached to the seat portion to support a back of the child, a headrest to support a head of the child, and opposing side wings extending from the back portion to partially surround the child during use. Preferably, the opposing side wings being fixed relative to the back portion. In this example, each of the opposing side wings comprises a foldable flap hingedly attached to the respective side wing, each foldable flap being foldable between a first position in which the foldable flap is substantially aligned with the side wing, and a second position in which the foldable flap is folded against the side wing and disposed between the opposing side wings.

Preferably, the child car seat is configured for a child having a height greater than about 70-80 centimetres, more specifically 76 centimetres. Preferably, the child car seat is configured for a child have a height less than about 150 centimetres. As explained hereinafter, preferably the child car seat has a first configuration for children having a height of between about 70-80 centimetres, specifically about 76 centimetres, and about 105 centimetres, specifically 106 centimetres. In addition, the child car seat preferably has a second configuration for children between about 105 centimetres, specifically 106 centimetres, and about 150 centimetres.

In preferred examples, the child car seat further comprises a seat belt attachment assembly for attaching the child car seat to a vehicle seat using a three-point seat belt of the vehicle. Preferably, the seat belt attachment assembly is configured to mount the child car seat to the vehicle in a forward facing orientation. In particular, the seat belt attachment assembly is configured to mount the child car seat to a seat of the vehicle so that the child car seat faces in the same direction as the vehicle seat, which is usually in a forward direction of the vehicle as well. This is in contrast to a 'rear facing car seat', which is typically used for babies.

The seat belt attachment assembly preferably comprises a plurality of seat belt attachment points for securing the child seat to the vehicle seat using a three-point seat belt of the vehicle. In particular, the plurality of seat belt attachment points are preferably configured to engage a lap portion and a chest portion of the three-point seat belt. Preferably, the plurality of seat belt attachment points are configured to route the lap portion and the chest portion of the three-point seat belt across the back portion to secure the child seat to the vehicle seat and such that in use the lap portion and the chest portion are behind the child.

Accordingly, a further aspect of the present invention provides a child car seat for mounting to a vehicle seat comprising a three-point seat belt having a lap portion and a chest portion. The child seat comprises a seat portion for a child to sit on, a rigid back portion attached to the seat portion to support a back of the child, and a headrest to support a head of the child. In this example, the back portion comprises a plurality of seat belt attachment points for securing the child seat to the vehicle seat using the three-point seat belt. The plurality of seat belt attachment points are configured to route the lap portion and the chest portion of the three-point seat belt across the back portion to secure the child seat to the vehicle seat and such that in use the lap portion and the chest portion are behind the child.

In preferred examples, the plurality of seat belt attachment points comprises first and second lap portion attachment points disposed on the back portion and arranged to route the lap portion of the three-point seat belt across the back portion of the child car seat and behind the child during use.

In preferred examples, the plurality of seat belt attachment points comprises at least one chest portion attachment point disposed on the back portion and arranged to engage the chest portion of the three-point seat belt such that the chest portion is routed across the back portion to one of the first and second lap portion attachment points, behind the child during use.

Preferably, the plurality of seat belt attachment points comprises a first chest portion attachment point and a second chest portion attachment point. The second chest portion attachment point may be disposed between the first chest portion attachment point and the seat portion. The first chest portion attachment point may be disposed at a top edge of the back portion. Accordingly, the chest portion of the seat belt is routed from the top edge of the child car seat, along one side of the child to the second chest portion attachment point, and then across the back portion to one of the first and second lap portion attachment points, behind the child during use.

Preferably, the first chest portion attachment point comprises a clamp for clamping the chest portion of the three-point seat belt to the child car seat. Preferably, the second chest portion attachment point comprises a hook, under which the chest portion of the seat belt can be routed. In some examples, the hook is configured to secure the strap of the harness when the harness is not in use.

In examples where the back portion comprises opposing side wings extending from either side of the back portion to partially surround the child during use, each of the chest portion attachment points may be disposed on one of the opposing side wings.

In preferred examples, the child car seat comprises first and second chest portion attachment points on both sides of the child car seat, so that the child car seat can be used with a three-point seat belt extending in either direction (i.e. it can be used on either side of the vehicle).

In preferred examples, the headrest is movable between a first position in which the seat belt attachment assembly can be used to attach the child car seat to the vehicle seat using a three-point seat belt of the vehicle, and a second position in which the three-point seat belt can extend around the child during use to secure the child and the child car seat to the vehicle seat.

The first position is preferably for children having a height of between about 70-80 centimetres and about 105 centimetres, specifically between about 76 centimetres and about 106 centimetres. The second position is preferably configured for children between about 105 centimetres and about 150 centimetres, specifically about 106 centimetres to about 150 centimetres.

In preferred examples, the buckle is configured to engage the lap portion of the three-point seat belt when the headrest is in the second position. In preferred examples, the headrest further comprises a hook adapted to receive the chest portion of the three-point seat belt in the second position of the headrest. In this way, the hook is moved up and down with the headrest to position the chest portion of the seat belt appropriately relative to the shoulder of the child.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

Embodiments of the invention will now be described by way of example only with reference to the accompanying drawings in which:
FIG. 1 is a perspective view of a child car seat in a first configuration;
FIG. 2 is a front view of the child car seat of FIG. 1;
FIG. 3 is a schematic diagram of how the child car seat of FIGS. 1 and 2 is mounted in a vehicle using a three-point seat belt;
FIG. 4 is a perspective view of a seat belt attachment point of the child car seat of FIGS. 1 to 3;
FIG. 5 is a perspective view of a child car seat in a second configuration;
FIG. 6 is a front view of the child car seat of FIG. 5;
FIG. 7 is a schematic diagram of how the child car seat of FIGS. 5 and 6 is mounted in a vehicle using a three-point seat belt;
FIG. 8 illustrates how the harness of the child seat belt is stored in the second configuration illustrated in FIGS. 5 to 7;
FIG. 9 is a perspective view of the child car seat of FIGS. 1 to 8 in a folded position;
FIG. 10 is a side view of the child car seat of FIGS. 1 to 8 in a folded position;
FIG. 11 is a schematic diagram of how the child car seat of FIGS. 1 to 10 is folded and unfolded; and,
FIG. 12 is a front view of the child car seat of FIGS. 1 to 11 illustrating an alternative position of the foldable flaps.

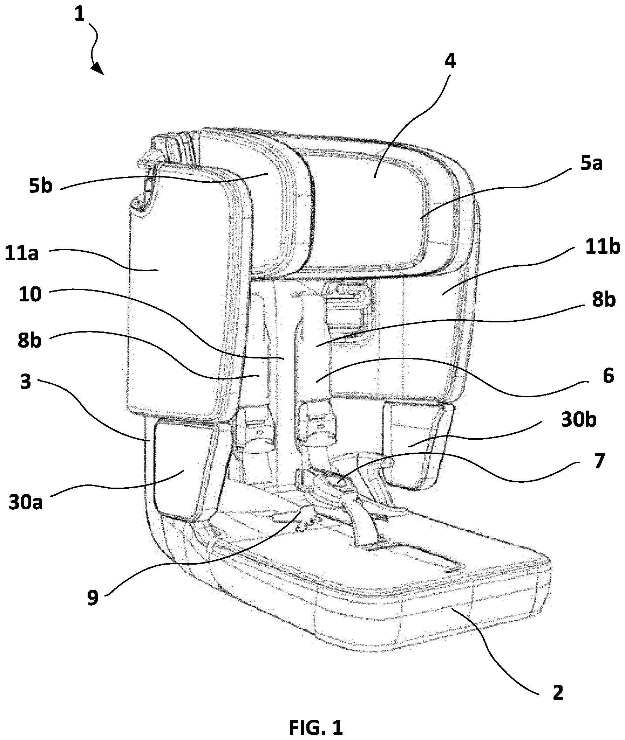

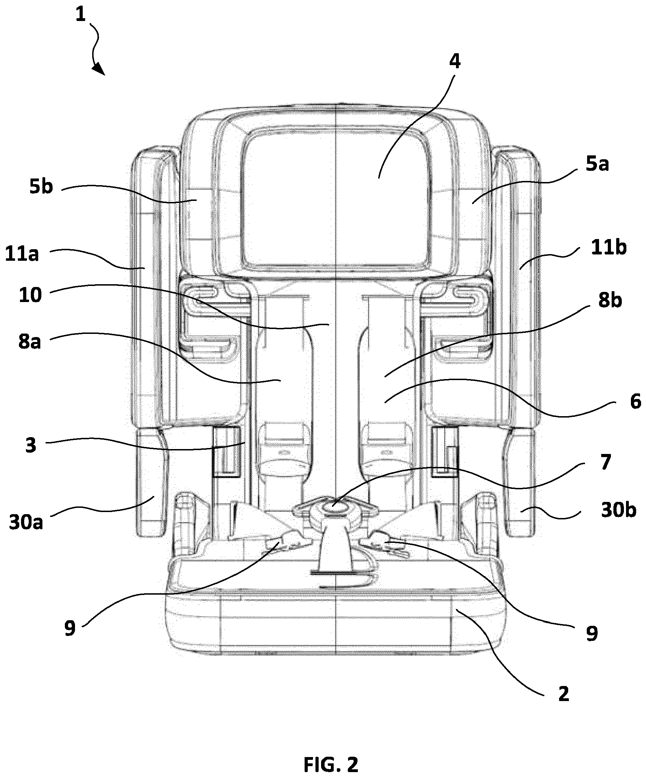

FIGS. 1 and 2 shows a child car seat 1 for mounting in a vehicle. The child car seat includes a seat portion 2 for a child to sit on, a rigid back portion 3 attached to the seat portion 2 to support a back of the child, and a headrest 4 to support a head of the child.

Preferably, the child car seat 1 is for a child having a height of 70-80 centimetres and over, more specifically about 76 centimetres and over. Regulations in many countries require a rear-facing car seat for children up to about 70-80 centimetres. Once above that height a forward-facing child car seat can be used. The child car seat 1 disclosed herein is a forward-facing child car seat for children having a height of 70-80 centimetres and over.

In this example the headrest 4 is slidably mounted to the back portion 3 so that the headrest 4 can be moved to alter a distance between the seat portion 2 and the headrest 4 to accommodate different size children. Preferably, the headrest 4 can be moved between different locked positions. The child car seat 1 may include a clamp or other securing mechanism to lock the headrest 4 in different positions relative to the back portion 3. Preferably, the headrest 4 is concave, having side portions 5a, 5b that extend around the sides of the child's head during use. However, in other examples the headrest 4 may be located only behind the child's head. Preferably, the headrest 4 is padded for comfort and protection.

In this example, the child car seat 1 also includes a harness 6 for securing the child to the child car seat 1. The harness 6 includes a buckle 7 that is attached to the seat portion 2. The harness 6 also includes a strap 8a, 8b that extends from the headrest 4 to engage the buckle 7. As shown, preferably the harness 6 includes two straps 8a, 8b extending from the headrest 4 to engage the buckle 7. In some examples ends of the straps 8a, 8b of the harness 6 directly couple to the buckle 7. In another example, as illustrated in FIGS. 1 and 2, the ends of the straps 8a, 8b are anchored to either the seat portion 2 or the back portion 3, and a slidable buckle-engaging component 9 is provided on each strap 8a, 8b so that each strap 8a, 8b can be form a lap-securing part and a shoulder-securing part when the buckle-engaging components 9 are attached to the buckle 7.

In some examples, an upper end of each strap 8a, 8b is anchored to the headrest 4. Alternatively, an upper end of each strap 8a, 8b is anchored to the back portion 3, and the headrest 4 comprises loops through which the straps 8a, 8b pass.

Accordingly, the headrest 4 can be moved up and down to alter a distance between the headrest 4 and the seat portion 2 to accommodate children of different sizes, in particular children of different height and weight. As the headrest 4 is moved up and down, the effective lengths of the straps 8a, 8b of the harness 6 are also adjusted to suit the height of the child, and the straps can be appropriately positioned relative to the shoulders of the child. In addition, as explained further hereinafter, the headrest 4 can be moved to reduce the size of the child car seat 1 in a folded configuration to make the child car seat 1 easier to store.

As shown in FIGS. 1 and 2, the headrest 4 preferably also includes a back member 10 that extends from the headrest 4 towards the seat portion 2 so that it overlaps a part of the back portion 3. In this way, when a child sits on the child car seat their back rests on the back member 10 of the headrest 4 and not directly on the back portion 3 of the child car seat 1.

As shown in FIGS. 1 and 2, the back portion 3 of the child car seat preferably includes side wings 11a, 11b extending from either side of the back portion 3. The side wings 11a, 11b are arranged to partially surround the child during use and protect the child against side impacts/movements. The side wings 11a, 11b are preferably fixed to the back portion 3, i.e. the side wings 11a, 11b are preferably immovable extensions of the back portion 3.

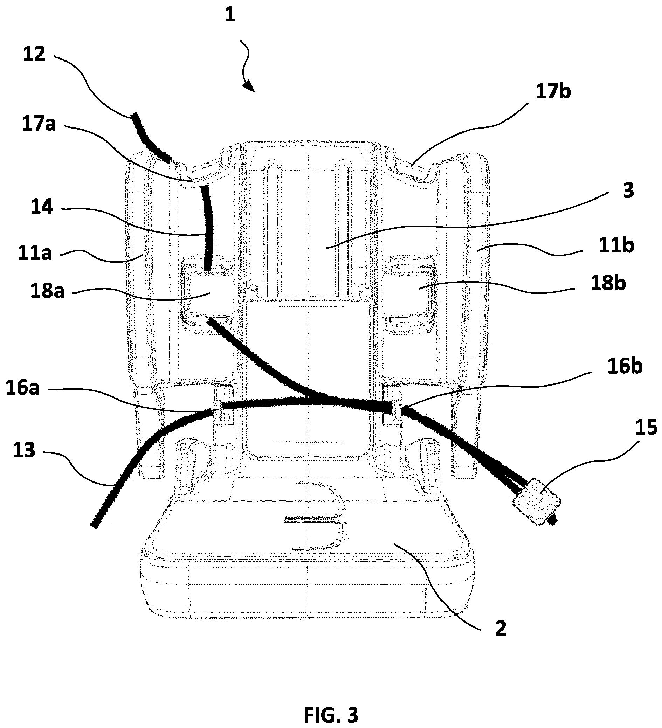

FIG. 3 illustrates how to secure the child car seat 1 of FIGS. 1 and 2 to a vehicle seat using a three-point seat belt 12 of the vehicle. The headrest (4, see FIGS. 1 and 2) of the child car seat 1 is omitted from FIG. 3 for clarity.

The three-point seat belt 12 of the vehicle includes a lap portion 13 that in usual operation (i.e. without the child car seat) would extend across a user's lap, and a chest portion 14 that in usual operation (i.e. without the child car seat) would extend diagonally across a user's chest from one shoulder. A buckle clip 15 is provided to secure the seat belt 12 in place. The chest portion 14 extends from a self-locking reel, and typically the buckle clip 15 slides along the seat belt to alter the length of the lap portion 13 according to the user.

As shown in FIG. 3, to secure the child car seat 1 to a vehicle seat using the three-point seat belt 12 the child car seat 1 has a seat belt attachment assembly. The seat belt attachment assembly is used to mount the child car seat 1 to the vehicle in a forward facing orientation. That is, the vehicle seat and the child car seat 1 are facing in the forward in the vehicle seat, which is also typically the travelling direction of the vehicle. The seat belt attachment assembly of the child car seat 1 includes a plurality of seat belt attachment points 16a, 16b, 17a, 17b, 18a, 18b for securing the child car seat 1 to the vehicle seat using a three-point seat belt 12 of the vehicle. The plurality of seat belt attachment points 16a, 16b, 17a, 17b, 18a, 18b engage the lap portion 13 and the chest portion 14 of the three-point seat belt 12.

As shown in FIGS. 1 to 3, the plurality of seat belt attachment points includes a first lap portion attachment point 16a and a second lap portion attachment point 16b disposed on the back portion 3. The first and second lap portion attachment points 16a, 16b are adjacent to the seat portion 2. The first and second lap portion attachment points 16a, 16b are arranged to route the lap portion 13 of the seat belt 12 across the back portion 3 of the child car seat 1, behind the child during use. Each of the first and second lap portion attachment points 16a, 16b has a hook behind which the lap portion 13 of the seat belt 12 is routed. The lap portion 13 of the seat belt 12 does not extend around the child during use. It extends across the back portion 3 between the first and second lap portion attachment points 16a, 16b.

Preferably, the lap portion 13 of the seat belt 12 is routed between the back portion 3 and the back member (10, see FIGS. 1 and 2) of the headrest (4, see FIGS. 1 and 2). In this way, the lap portion 13 of the seat belt 12 is shielded from the child.

As shown in FIGS. 1 to 3, the plurality of seat belt attachment points also includes at least one chest portion attachment point 17a, 17b, 18a, 18b. In the illustrated example, the child car seat 1 includes first chest portion attachment points 17a, 17b and second chest portion attachment portions 18a, 18b. The chest portion attachment points 17a, 17b, 18a, 18b are disposed on the back portion 3 and are arranged to engage the chest portion 14 of the seat belt 12. As shown, the chest portion attachment points 17a, 17b, 18a, 18b are arranged to route the chest portion 14 of the seat belt 12 across the back portion 3 to the second lap portion attachment point 16b.

The chest portion 14 of the seat belt 12 does not extend around the child during use. It extends across the back portion 3 between the second chest portion attachment point 18a and the second lap portion attachment point 16b. Preferably, the chest portion 14 of the seat belt 12 is routed between the back portion 3 and the back member (10, see FIGS. 1 and 2) of the headrest (4, see FIGS. 1 and 2).

It will be appreciated that the chest portion attachment points 17a, 17b, 18a, 18b are arranged in pairs, with one first chest portion attachment point 17a, 17b and one second chest portion attachment point 18a, 18b on each side of the back portion 3. In this way, the child car seat 1 can be mounted to the vehicle on either side (i.e. with the chest portion 14 of the seat belt 12 coming over either shoulder). Accordingly, the buckle clip 15 may be located on an opposite side, and when mounted on the other side of the vehicle the lap portion 13 can extend from the second lap portion attachment point 16b to the first lap portion attachment point 16a.

As shown in FIGS. 1 to 3, preferably the first and second chest portion attachment points 17a, 17b, 18a, 18b are on the side wings 11a, 11b of the back portion 3. However, in some examples where there are no side wings 11a, 11 b the chest portion attachment points 17a, 17b, 18a, 18b may be located on the back portion 3.

As illustrated, each side wing 11a, 11b includes a first chest portion attachment point 17a, 17b and a second chest portion attachment point 18a, 18b. The chest portion attachment points 17a, 17b, 18a, 18b are disposed to the side of the child during use.

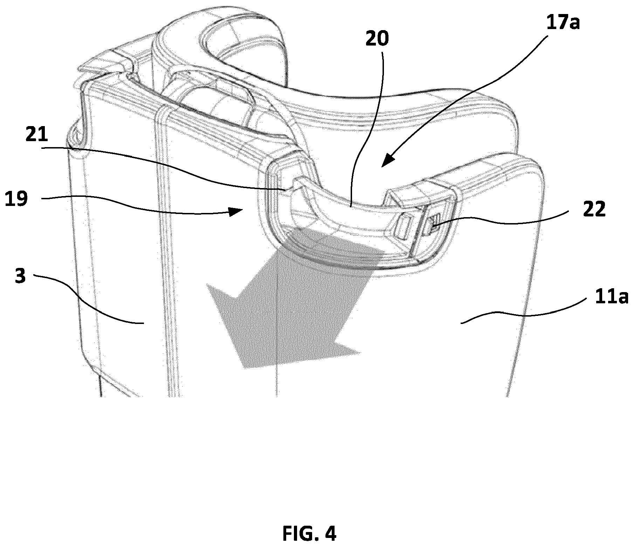

In a preferred example, each of the first chest portion attachment points 17a, 17b comprises a clamp 19 arranged to clamp the chest portion 14 of the seat belt 12 to the child car seat 1, as shown in FIG. 4. The clamp 19 includes a clamping member 20 that is pivoted at hinge 21 so that the clamping member 20 can be pivoted away from the back portion 3 to open the clamp 19. A latch 22 is provided to hold the clamping member 20 in the clamped position. The latch 22 can be released by a user. As shown in FIG. 3, the chest portion 14 of the seat belt 12 can be clamped by closing the clamping member 20 onto the chest portion 14. The clamp 19 may include a spring to urge the clamping member 20 to an open or closed position.

As shown in FIG. 3, each of the second chest portion attachment points 18a, 18b is preferably a hook, behind which the chest portion 14 of the seat belt 12 can be routed. The second chest portion attachment points 18a, 18b advantageously keep the chest portion 14 of the seat belt 12 away from the child during use. Providing first and second chest portion attachment points 17, 17b, 18a, 18b on either side, as illustrated in FIG. 3, ensures that the seat belt 12 is routed to avoid the child during use, and allows the seat belt 12 to be routed behind the back of the child, preferably behind the back member (10, see FIGS. 1 and 2) of the headrest (4, see FIGS. 1 and 2).

FIGS. 1 to 3 show the child car seat 1 in a configuration for children having a height from about 70-80 centimetres, specifically about 76 centimetres, up to about 105 centimetres, specifically 106 centimetres, which is approximately 4 years of age. In this configuration, as described above, the seat belt 12 is used to secure the child car seat 1 to the vehicle and the harness 6 is used to secure the child to the child car seat 1. The headrest 4 can be moved up and down to accommodate different height children under 105 centimetres by moving the headrest 4 to the appropriate position, and in doing so simultaneously adjusting the positions of the top of the straps 8a, 8b of the harness 6 to fit the child.

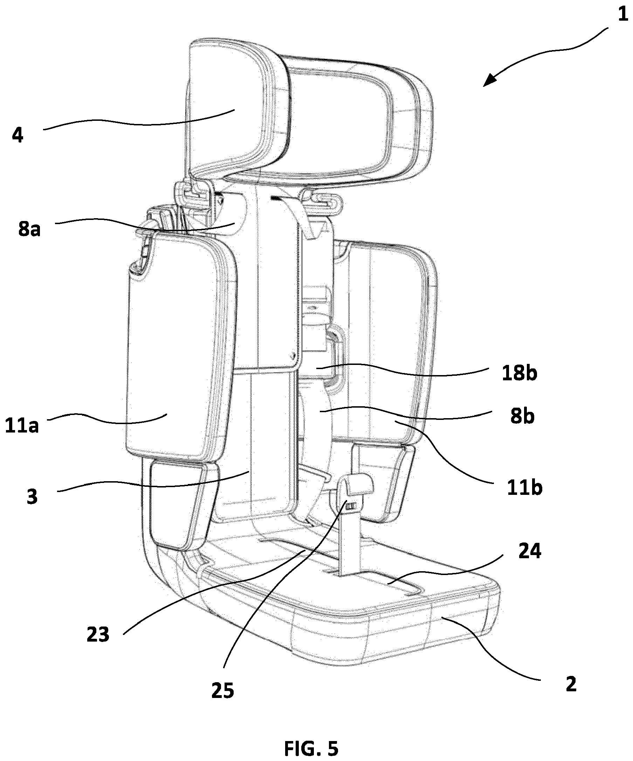

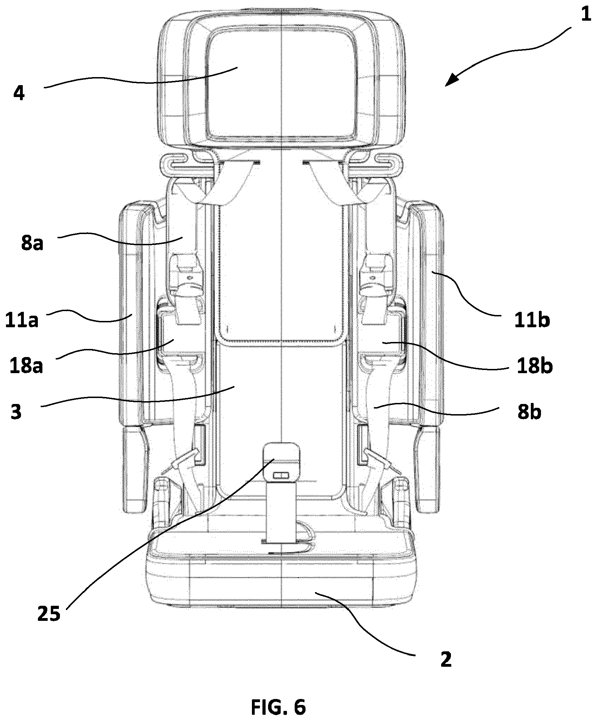

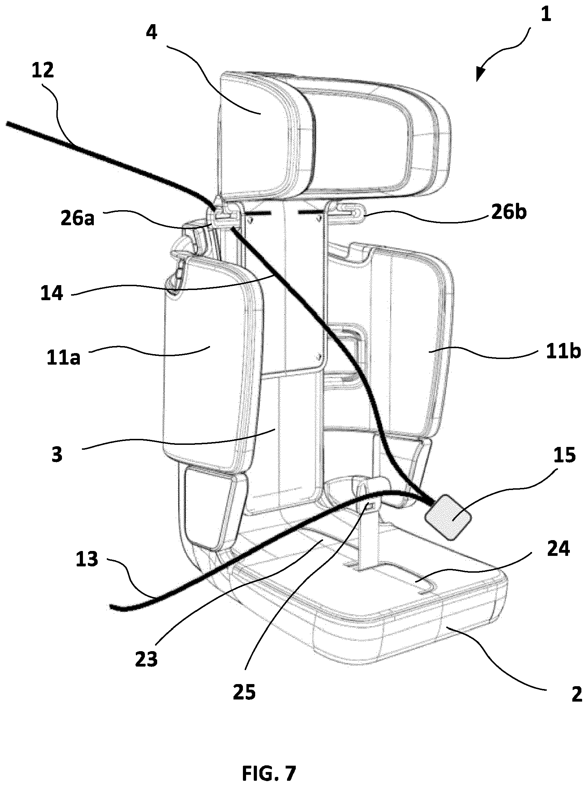

FIGS. 5 to 8 show the child car seat 1 in a different configuration, for use with children over about 105 centimetres in height, specifically over about 106 centimetres. Once over 105 centimetres in height the child may use the seat belt in the normal manner, but it is still preferable, and in many countries a legal requirement, to use the child car seat 1 as a booster seat to ensure that the child is correctly positioned for the seat belt to be effective. In this configuration the child car seat 1 can be used until the child is about 150 centimetres in height.

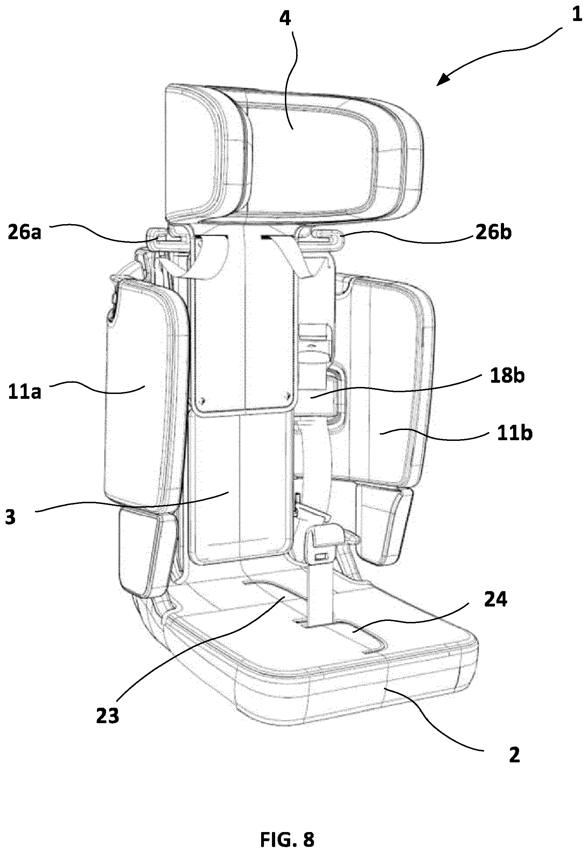

As illustrated, in this configuration the headrest 4 is raised to a higher position than in the example of FIGS. 1 to 4. In particular, the headrest 4 is slid to a position where it is further from the seat portion 2, as shown in FIGS. 5 to 8. Moreover, the harness 6 is secured out of the way, as it is not being used. In particular, the straps 8a ,8b of the harness 6 are hooked through the second chest portion attachment points 18a, 18b to hold them to the side, as shown in detail in FIG. 8.

As illustrated, particularly in FIG. 8, the seat portion 2 includes a storage recess 23 for the buckle (7, see FIGS. 1 and 2) of the harness illustrated in FIGS. 1 to 4, and a storage recess 24 for an alternative buckle 25 for the configuration shown in FIGS. 5 to 8. Therefore, a user can change which buckle (either 7, or 25) is being used, as will become apparent hereinafter.

In the configuration shown in FIGS. 5 to 8 the seat belt 12 extends around the child and the child car seat 1. As shown, the headrest 4 includes two hooks 26a, 26b on either side of the child car seat 1, and the chest portion 14 of the seat belt 12 passes through one of the hooks 26a, 26b, depending which side the chest portion 14 is arranged. The hooks 26a, 26b ensure that the chest portion 14 of the seat belt 12 is properly positioned relative to the shoulder of the child. The hooks 26a, 26b move up and down with the headrest 4 to accommodate different height children.

As also shown in FIGS. 5 to 8, the alternative buckle 25 on the seat portion 2 hooks onto the lap portion 13 of the seat belt 12. Alternatively, the alternative buckle 25 on the seat portion 2 may clip onto the lap portion 13 of the seat belt 12. The lap portion 23 of the seat belt 12 is preferably able to slide through the alternative buckle 25. This provides additional security for holding the child car seat 1 in place and prevents the lap portion 13 from riding up on the child.

As mentioned above, the headrest 4 can be moved downwards to reduce the size of the child car seat 1 and make it easier to store.

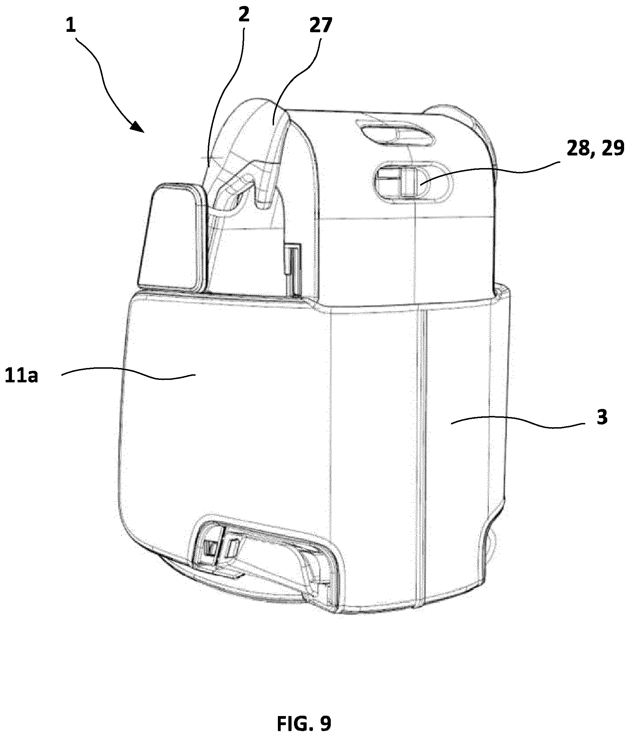

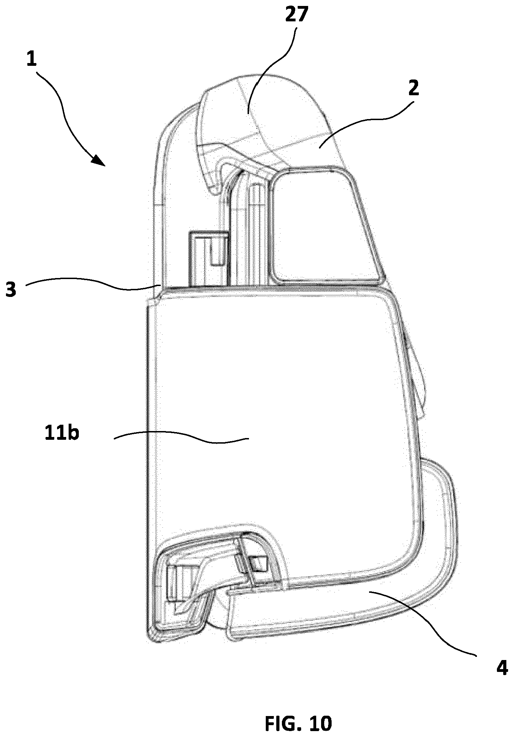

Additionally, as shown in FIGS. 9 to 11, the child car seat 1 can be folded to reduce its size further. In particular, the seat portion 2 is hingedly connected to the back portion 3 at hinge 27 so that the seat portion 2 can be folded onto the back portion 3. The seat portion 2 can thereby be moved between an operational position, shown in FIGS. 1 to 8, in which the seat portion 2 and the back portion 3 are arranged for a child to sit on, and a folded position shown in FIGS. 9 and 10.

The seat portion 2 is folded so that the seat portion 2 is disposed between the side wings 11a, 11b and adjacent to the headrest 4 in the folded position. As shown in FIGS. 9 and 10, this provides a compact folded child car seat 1 that can easily be stored when not in use, for example in a boot of a vehicle.

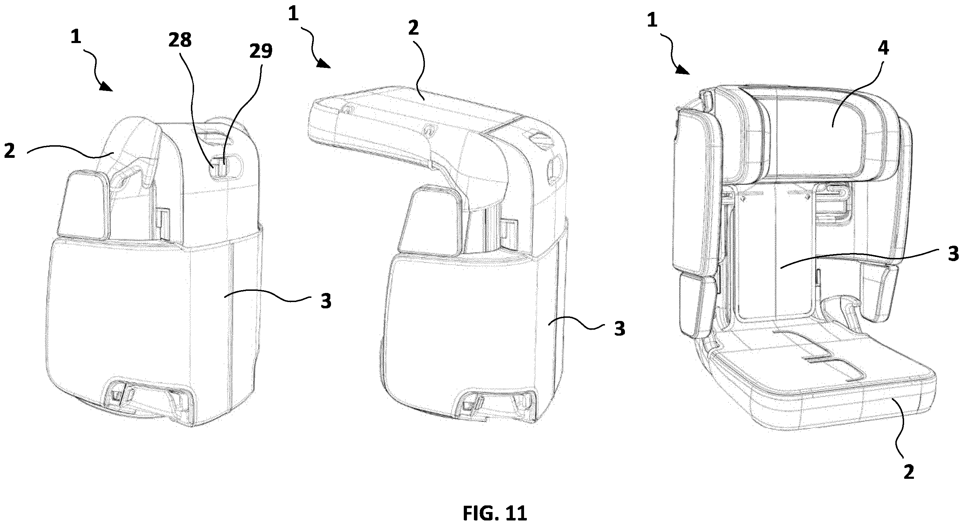

The child car seat 1 also includes a lock 28 adapted to lock the seat portion 2 in the folded position and/or in the operational position. Preferably, the lock 28 is adapted to lock the seat portion 2 in both of the folded and the operational positions. As shown in FIGS. 9 and 11, the lock 28 include a release lever 29 that can be operated to release the lock 28 for moving the seat portion 2 between the operational and folded positions. Preferably, the lock 28 automatically locks the seat portion 2 when the seat portion 2 reaches the operational and folded positions. Preferably the lock 28, including the release lever 29, is spring loaded.

As shown in FIGS. 9 and 11, the release lever 29 is preferably located on a rear of the child car seat 1, on an opposite side of the back portion 3 to where the child sits during use. In this way, when the child car seat 1 is mounted to the vehicle the release lever 29 cannot be reached, to prevent to release lever 29 being pulled during use.

As mentioned above, the side wings 11a, 11b of the child car seat 1 are preferably fixed to the back portion 3. Advantageously, providing fixed side wings 11a, 11b provides additional security and protection against side impacts.

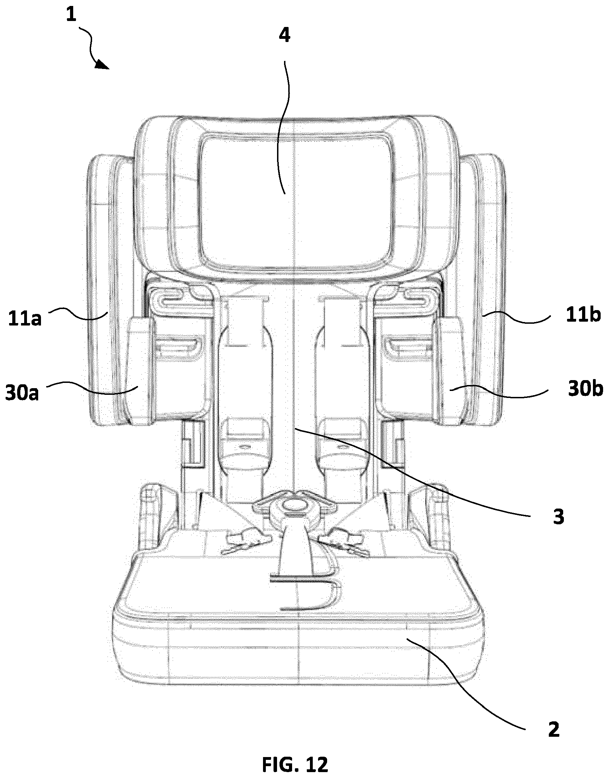

As illustrated in FIGS. 1, 2 and 12, each side wing 11a, 11b includes a foldable flap 30a, 30b. The foldable flaps 30a, 30b are movable to a first position in which the foldable flaps 30a, 30b are extensions of the side wing, extending substantially parallel to the side wings 11a, 11b as shown in FIGS. 1 and 2. As shown in FIG. 12, the foldable flaps 30a, 30b are movable to a second position in which the foldable flaps 30a, 30b are folded relative to the side wings 11a, 11b so that they are disposed between the opposing side wings 11a, 11b. This reduces a width of a space between the opposing side wings 11a, 11b where the child sits. The foldable flaps 30a, 30b can therefore be folded inwards, as shown in FIG. 12, when the child car seat 1 is being used for smaller children to improve side impact protection and to reduce the freedom of movement of the child during use. This may be in the first configuration (using the harness 6, as shown in FIGS. 1 to 3) or in the second configuration (not using the harness 6, as shown in FIGS. 5 to 8).

It will also be appreciated by those skilled in the art that any number of combinations of the aforementioned features and/or those shown in the appended drawings provide clear advantages over the prior art and are therefore within the scope of the invention described herein.

## Claims

1. A child car seat for mounting in a vehicle, the child car seat comprising:
a seat portion for a child to sit on,
a rigid back portion attached to the seat portion to support a back of the child,
a headrest to support a head of the child, the headrest being slidably mounted to the back portion such that the headrest can be slid to alter a distance between the seat portion and the headrest to accommodate different size children, and
a harness comprising a buckle attached to the seat portion and a strap extending from the headrest to engage the buckle such that sliding the headrest relative to the back portion adjusts a position of the strap.

2. The child car seat of claim 1, wherein the headrest further comprises a back member extending towards the seat portion and overlapping a part of the back portion such that the child rests on the back member during use.

3. The child car seat of claim 1 or claim 2, wherein the seat portion is hingedly mounted to the back portion such that the seat portion can be folded between an operational position in which the seat portion and the back portion are arranged for a child to sit on, and a folded position in which the seat portion is folded towards the back portion.

4. The child car seat of claim 3, further comprising a lock adapted to lock the seat portion in the folded position and/or in the operational position.

5. The child car seat of claim 4, wherein the lock comprises a release lever operable to release the seat portion from the locked position.

6. The child car seat of any preceding claim, wherein the seat portion comprises a storage recess for the buckle.

7. The child car seat of any preceding claim, wherein the back portion further comprises opposing side wings extending from either side of the back portion to partially surround the child during use, the opposing side wings being fixed to the back portion.

8. The child car seat of claim 6 or claim 7, wherein each of the opposing side wings comprises a foldable flap hingedly attached to the respective side wing, each foldable flap being foldable between a first position in which the foldable flap is substantially aligned with the side wing, and a second position in which the foldable flap is folded against the side wing and disposed between the opposing side wings.

9. The child car seat of any preceding claim, wherein the child car seat is configured for a child having a height greater than about 70-80, preferably about 76 centimetres.

10. The child car seat of any preceding claim, further comprising a seat belt attachment assembly for attaching the child car seat to a vehicle seat using a three-point seat belt of the vehicle.

11. The child car seat of claim 10, wherein the seat belt attachment assembly is configured to mount the child car seat to the vehicle in a forward facing orientation and/or comprises a plurality of seat belt attachment points for securing the child seat to the vehicle seat using a three-point seat belt of the vehicle, the plurality of seat belt attachment points being configured to engage a lap portion and a chest portion of the three-point seat belt.

12. The child car seat of claim 11, wherein the plurality of seat belt attachment points comprises at least one of:
first and second lap portion attachment points disposed on the back portion and arranged to route the lap portion of the three-point seat belt across the back portion of the child car seat and behind the child during use; and/or
at least one chest portion attachment point disposed on the back portion and arranged to engage the chest portion of the three-point seat belt such that the chest portion is routed across the back portion to one of the first and second lap portion attachment points, behind the child during use.

13. The child car seat of claim 12, wherein the plurality of seat belt attachment points comprises a first chest portion attachment point and a second chest portion attachment point, the first chest portion attachment point comprising a clamp for clamping the chest portion of the three-point seat belt to the child car seat.

14. The child car seat of claim 12 or claim 13, wherein the back portion comprises opposing side wings extending from either side of the back portion to partially surround the child during use, and wherein each of the chest portion attachment points is disposed on one of the opposing side wings.

15. The child seat of any of claims 10 to 14, wherein the headrest is movable between a first position in which the seat belt attachment assembly can be used to attach the child car seat to the vehicle seat using a three-point seat belt of the vehicle, and a second position in which the three-point seat belt can extend around the child during use to secure the child and the child car seat to the vehicle seat, the buckle being configured to engage the lap portion of the three-point seat belt when the headrest is in the second position.
